Europäisches Patentamt

**European Patent Office**

Office européen des brevets

(11) Publication number: **0 326 633**
**A1**

(12) ## EUROPEAN PATENT APPLICATION

(21) Application number: 88101486.4

(51) Int. Cl.⁴: **A23N 17/00**

(22) Date of filing: 02.02.88

(43) Date of publication of application:
**09.08.89 Bulletin 89/32**

(84) Designated Contracting States:
**DE FR GB NL**

(71) Applicant: **Automatic Mechanical System
Engineering Company
Toyama Building 16 Azuchimachi 1-chome
Higashi-ku Osaka(JP)**

(72) Inventor: **Kato, Shoji c/o Automatic
Mechanical System
Engineering Company 16, Azuchimachi
1-chome
Higashi-ku Osaka(JP)**
Inventor: **Uchida, Kenji c/o Automatic
Mechanical System
Engineering Company 16, Azuchimachi
1-chome
Higashi-ku Osaka(JP)**
Inventor: **Chiba, Hiroyoshi c/o Automatic
Mechanical System
Engineering Company 16, Azuchimachi
1-chome
Higashi-ku Osaka(JP)**

(74) Representative: **Glawe, Delfs, Moll & Partner
Patentanwälte
Postfach 26 01 62 Liebherrstrasse 20
D-8000 München 26(DE)**

(54) **Method and apparatus for processing grain.**

(57) An apparatus for processing a grain material has a plurality of digesters. The material to be processed is fed in batches into one digester after another and discharged from one digester after another in succession after being digested. Thus the material digested can be sent to the subsequent steps ar a uniform rate. Since with this arrangement it is possible to use lock valves instead of rotary valves at the inlet and discharge ports of the digesters, pressurized steam introduced into the tanks for digestion is less liable to leak out. The material digested is then flaked, dried and cooled to a normal temperature for use as feed for domestic animals.

FIG.1

# METHOD AND APPARATUS FOR PROCESSING GRAIN

The present invention relates to a method and apparatus for modifying the starch in grain such as corn and millet into an α-type.

It is known to subject grain such as corn and millet to α-modification or gelatinization to produce a feed for domestic animals such as cows and pigs which is easy of digestion for animals and helps them to grow rapidly. Since the α-modification or gelatinized feed can be fed to animals as it is, cattle breeders are freed from the trouble of preparing a feed by themselves.

Grain is usually alpha-modified or gelatinized by digestion. An apparatus for digesting grain is disclosed in the Japanese Patent Publication No. 57-8591 which comprises, as shown in Fig. 6, a horizontally elongated tank T provided at its top with an material inlet port having a lock valve V and at its bottom with a discharge port having another lock valve V, net conveyors C provided in the tank in such a manner as to extend longitudinally of the tank and to be vertically spaced from one another, flaking rollers L, and a drier H and a cooler B which are provided downstream of the tank in this order. As the material is fed into the tank T through the inlet port, pressurized steam is supplied into the tank to digest the material while being carried on the conveyors C. The material digested in the tank is flaked by the flaking rollers L, dried by the drier H to reduce its water content to the level before digestion, and cooled down to the atmospheric temperature by the cooler B.

The steps of digesting, flaking, drying and cooling should preferably be carried out successively without intermission to attain high productivity and to obtain homogeneous end products. In order to supply and discharge the material successively, the prior art uses rotary valves as the lock valves V at the inlet and discharge ports of the tank T. Thus, the material is carried on the conveyors C successively from inlet to outlet.

However, since the rotary valve is adaped to seal the tank by bringing its vanes into frictional contact with the casing, it is impossible to obtain a perfect seal of the tank without hampering a smooth feed and discharged of the material. Thus, the leakage of steam from the tank has to be tolerated to a certain extend. This causes the air tightness in the tank T to drop. Since it is necessary to keep the pressurized steam in the tank T for digestion, a greater amount of steam has to be charged into the tank T to make up for the leakage. Further, since the material is digested while being carried on the conveyors, the tank has to be large enough for the material to move a long distance in the tank.

An object of the present invention is to provide a method and apparatus which obviate the abovesaid shortcomings.

Another object of the present invention is to provide a digester which is small and needs less steam.

Other features and objects of the present invention will become apparent from the following description taken with reference to the accompanying drawings, in which:

Fig. 1 is a schematic view of one embodiment of the method for processing grain according to the present invention;

Figs. 2 to 4 are views showing parts of Fig. 1 in detail;

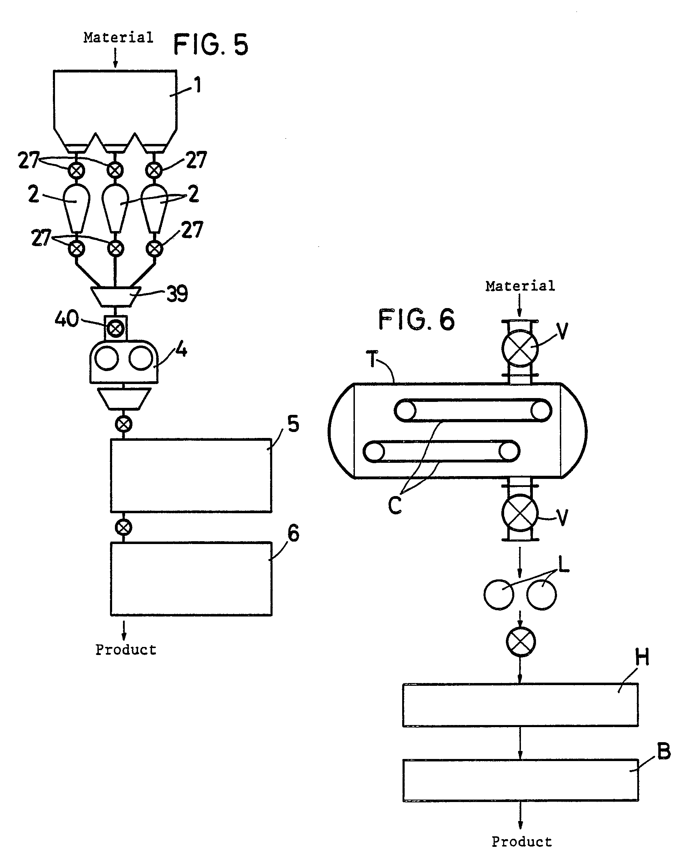

Fig. 5 is a schematic view of another embodiment; and

Fig. 6 is a schematic view of one example of the prior art processing methods.

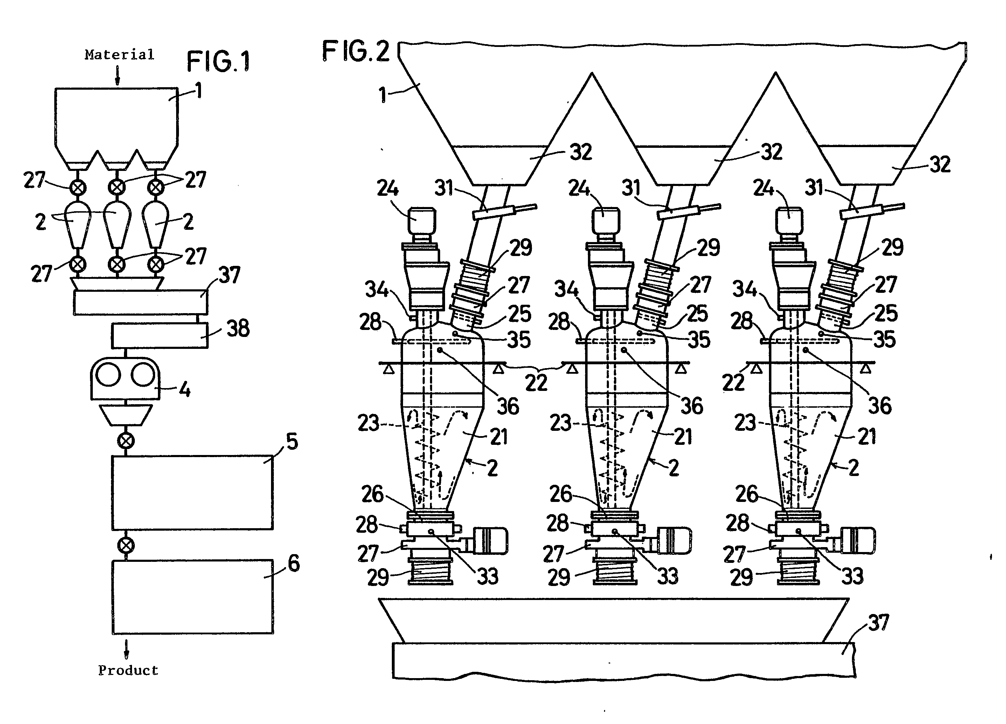

Now referring to Fig. 1, the apparatus according to the present invention comprises a material supply tank 1, three digesters 2 into which the material to be processed is fed from the supply tank 1, a flaking device 4 for flaking the material digested, a drier 5 for drying the material to reduce its water content to the level before digestion, and a cooler 6 for cooling the material fed from the drier. The material is subsequently discharged back into the atmosphere and this completes processing.

As shown in Fig. 2, each digester 2 comprises a tank 21 having a cylindrical upper part and an inverted conical lower part. Each tank 21 is supported by a measuring device 22, spaced from an outer frame (not shown). In each tank, there is provided a vertically extending screw 23 having a diameter about one-fourth of the diameter of the inverted conical portion at its top. The screw 23 is rotated in both directions by a motor 24 mounted on each tank 21. As the screw 23, a ribbon type is employed to minimize the sticking of grain.

A grain supply pipe 25 at the top of the tank 21 and the discharge pipe 26 at its bottom are each provided with a butterfly valve 27 to keep the tank airtight when grain is fed into and discharged from the tank. Each tank 21 has pressurized steam feed pipes 28 connected to its top and bottom. Pressurized steam is fed into the tanks 21 through the pipes 28.

The upper butterfly valve 27 is connected to a feeder pipe 30 through bellows 29, so that the valve 27 will be free from the weight of the feeder pipe 30. The feeder pipes 30 are each provided with a damper 31 so as to be opened and closed independently of one another. The feeder pipes 30 are connected to material feed hoppers 32. By opening the dampers 31, the material (grain) in the tank 1 is fed through the feeder pipes 30 to the valves 27. The valves 27 are then opened to supply the material into the tanks 21. In the drawings, numerals 33, 34, 35 and 36 designate drain holes, air vents, and temperature indicators and pressure indicators, respectively.

The discharge pipes 26 are connected to a feeder type distributer 37 through bellows 29. A screw type constant feeder 38 is connected to the distributor 37. The feeder 38 has a narrower screw pitch at a portion near the connecting point to the distributor 37 (grain supply portion) than at the other part. Thus, the material is discharged uniformly and constantly therefrom. A flaking device 4 comprising a pair of rollers is disposed under the discharge port of the feeder 38. The flaking device 4 serves to remove steam from the material fed from the feeder 38 by means of a fan (not shown) while flaking the material and send it to the drier 5.

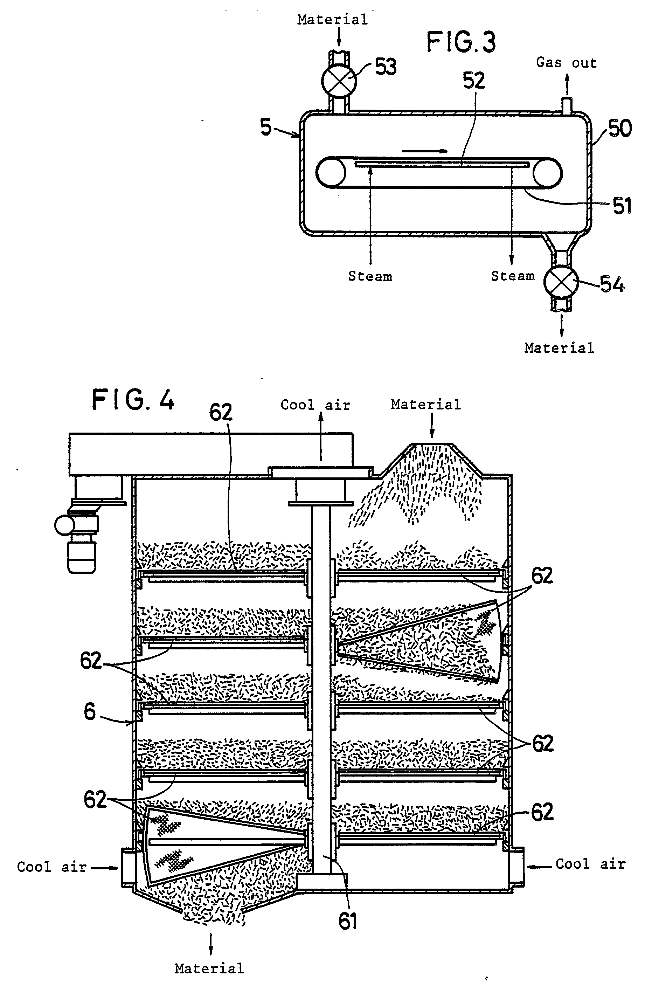

The drier 5 may be a hot-air type or a vacuum heating type. The latter drier may have a construction as shown in Fig. 3 and comprise a tank 50, a conveyor 51 provided in the tank 50, a hollow hot plate 52 provided under the forward path of the conveyor 51 and adapted to be heated by circulating steam therethrough, a material intake lock valve 53 and a discharge lock valve 54. The flaked material is fed into the vacuum tank 50 through the lock valve 53 so as to remove its water content when heated by the hot plate 52 while being carried on the conveyor 51 and is sent out through the lock valve 54 to the cooler 6.

Since under vacuum conditions the boiling point of water drops and thus the difference between the temperature of the hot plate 52 and the boiling point widens, the water content in the material is rapidly vaporized and thus the material is smoothly dried. Further, if the boiling point of water becomes lower than the temperature of the material, the material is deprived of heat when its water content vaporizes, thus lightening the burden of the cooler at the next stage. The vacuum drying offers another advantage that when the water vaporizes, the material inflates to be formed into a porous format having a great number of pores therein. This will promote digestion by animals.

The digested and dried mateial is then sent to the cooler 6 where it is cooled to a normal temperature. The cooler 6 may be one provided with a known net conveyor or an upright·cylindrical one as shown in Fig. 4. The one shown in Fig. 4 comprises a rotary shaft 61 and a plurality of fan-shaped vanes· 62 mounted on the rotary shaft 61 and having their side edges juxtaposed to those of adjacent vanes to form a plurality of disks arranged horizontally around the rotary shaft and vertically spaced from one another. The cooler 6 is partitioned by the disks into a plurality of compartments. One of the vanes forming each disk is adapted to turn about its horizontal axis by 90 degrees at a predetermined point while the disks are rotated by the rotary shaft 61. Thus, the material is sent gradually from upper compartments to lower compartments. Cold air is blown from below upwardly through the cooler 6 to cool down the material being sent downwardly.

In operation, the damper 31 for the digester at the righthand side of Fig. 2 is opened to supply a predetermined weight of material into the right side tank 21. The, after closing the butterfly valves at the top and bottom of the tank 21 to keep interior of the tank air-locked, pressurized steam is fed into the tank and the screw is rotated in a normal direction to send the material at the bottom upwardly as shown by arrow in Fig. 2. Thus, the material in the tank is uniformly agitated so as to be smoothly digested. Since the material is agitated in the tank, the temperature and pressure in the tank 21 are levelled out and the material is evenly exposed to the steam so as to be digested homogeneously or gelatinized.

After the material has been digested and gelatinized, the screw 23 is then rotated in a reverse direction to send the material downwardly to discharge it through the butterfly valve 27 at the bottom of the tank to the distributor 37. When the material is being discharged, pressurized steam is blown into the tank 21 to clean up the inside of the tank. After cleaning, the supply of steam stops. The material is fed from the distributer 37 through the feeder 38 to the flaking device 4 at a uniform rate. The material flaked is then dried in the drier 5 and cooled to a normal temperature in the cooler 6. Thus, the α-modification of the grain is complete.

In the above operation, the weight of the material is measured by the measuring device 22 before and after digestion to determine the increase in water content. Before digestion, the material normally contains about 14 percent of water. Thus, if the material which weighs 250 kg. before digestion gains weight to 262.5 kg. after digestion, this means that its water contant has increased by about 5 percent to around 19 percent. Based upon the water content and the measurements of the temperature indicators 35, the feed rate of the material from the feeder 38 and the operating times of the flaking device 4, dryer 5 and cooler 6 are proportionately controlled. If the water content of the material after digestion is rather high, the drier 5 is controlled to keep the material therein for a long time. If the water content is not so high, the material is left in the drier for a shorter period of time. The holding time is controlled by controlling the feed of the carrier means such as the conveyor in the drier. The holding time of the material in the coller 6 is controlled according to its water content and temperature in the same manner as in the drier. The feed rate of the material from the feeder is in turn controlled on basis of the holding time of the material in the drier and the cooler. As an alternative way of control, their capacity may be controlled instead of the operating time.

While the digester at the righthand side is in operation, part of the material is fed to the middle tank 21 and digested in the same manner as with the right side tank. The material digested in the middle tank is discharged after the material in the right side tank has been discharged. In this way, the tanks are put into operation succesively from the right side one to the left side. While the tank at the left side is in operation, the tank at the right is put into operation again. Thus, the material digested in the tanks 21 are consecutively fed by the feeder 38 to the flaking device 4. The process after flaking is conducted consecutively as well.

Though in the preferred embodiments three digesters are used, they may be provided in any other number.

Also, the distributor 37 and the feeder 38 may be replaced with a hopper 39 for receiving the material digested from all the digesters and a rotary valve type distributor 40 for evenly feeding the material supplied from the hopper 39 to the flaking device 4.

Steam may be fed into the digesters from one steam source (such as a boiler) or may be supplied individually from separate steam sources.

According to the present invention, the material is fed in batches into the digester tanks. Every time a batch of material has been fed into each tank, the tank can be hermetically sealed by the lock valves. Thus, the leakage of steam is minimized. This leads to a cost reduction.

Also, since flaking, drying and cooling of the material are controlled based upon the measured weight of the material before and after digestion, these operations can be carried out in an efficient way. This allows reduction of the operating time and saving of energy such as electric power.

Because a means for circulating and agitating the material (grain) in each tank is provided, the material is smoothly agitated so as to be homogeneously alpha-modified. Since the material is circulated throughout the tanks, a comparatively large amount of material can be processed even if the tanks are small in size and capacity.

## Claims

1. A method of processing a grain material comprising the steps of digesting said material with a plurality of digesters, flaking, drying and cooling, said material being fed in batches into one digester after another, digested in said digesters and discharged from one digester after another, whereby the processing operations after flaking are carried out consecutively.

2. A method of processing a grain material as claimed in claim 1, further comprising the steps of measuring the weights of batches of the material before and after digestion so as to control the operations after flaking on the basis of the measurements.

3. An apparatus for processing a grain material, comprising a plurality of vertically elongaged tanks, each tank being formed at its top with a material intake port provided with a lock valve and formed at its bottom with a discharge port provided with a lock valve, and a screw extending vertically in said tank and adapted to be rotated in both directions, said each tank having a size large enough for the material to be circulated by said screw throughout said tank, said each tank being provided with a means for introducing pressurized steam thereinto.

4. An apparatus for processing a grain material as claimed in claim 3, wherein said screw is a ribbon type.

FIG.1

Material →

FIG.2

Product →

FIG.3

FIG.4

Material

FIG. 5

1

27 — 27

2 — 2

27 — 27

39

40

4

5

6

Product

Material

FIG. 6

T

V

C

V

L

H

B

Product

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A- 536 306 (P.J. GAVIN) | | A 23 N 17/00 |
| A | PATENT ABSTRACTS OF JAPAN, vol. 7, no. 61 (C-156)[1206], 15th March 1983, page 40 C 156; & JP-A-57 208 964 (SHINMEI SEISAKUSHO K.K.) 22-12-1982 | | |
| A | SOVIET INVENTIONS ILLUSTRATED, week 84, 4th July 1984, no. 84-132432/21, Derwent Publications Ltd, London, GB; & SU-A-10 37 907 (ODESS FOOD IND. TECH.) 30-08-1983 | | |

TECHNICAL FIELDS
SEARCHED (Int. Cl.4)

A 23 N
A 23 K
C 08 B

The present search report has been drawn up for all claims

| Place of search | Date of completion of the search | Examiner |
|---|---|---|
| THE HAGUE | 04-10-1988 | LENSEN H.W.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)